# EUROPÄISCHE PATENTSCHRIFT

(11) **EP 3 763 197 B1**
(45) Veröffentlichungstag und Bekanntmachung des Hinweises auf die Patenterteilung: **31.07.2024**
(21) Anmeldenummer: 20181644.4
(22) Anmeldetag: 23.06.2020
(51) Int. Cl.: A01D 90/12

(54) **LANDWIRTSCHAFTLICHER LADE- UND/ODER TRANSPORTWAGEN**
AGRICULTURAL LOADING AND / OR TRANSPORT CART
CHARIOTS AGRICOLES DE CHARGEMENT ET/OU DE TRANSPORT

(30) Priorität: 09.07.2019 DE 102019118520
(43) Veröffentlichungstag der Anmeldung: 13.01.2021
(73) Patentinhaber: PÖTTINGER Landtechnik GmbH, 4710 Grieskirchen (AT)
(72) Erfinder: Prechtl, Wolfgang, 4710 Grieskirchen (AT); Hofinger, Markus, 4710 Grieskirchen (AT)
(74) Vertreter: Thoma, Michael

(56) Entgegenhaltungen:
- DE-A1- 102014 108 449
- DE-U1- 202006 018 149
- US-A1- 2014 325 422
- US-A1- 2017 206 645

## Beschreibung

Die vorliegende Erfindung betrifft einen landwirtschaftlichen Lade- und/oder Transportwagen, mit einem Laderaum zum Aufnehmen von landwirtschaftlichem Erntegut, einer Füllstands-Erfassungseinrichtung zum Erfassen des Erntegutfüllstands im Laderaum sowie Bereitstellen eines Füllstandsignals an eine Anzeigevorrichtung zum Anzeigen des erfassten Füllstands. Die Erfindung betrifft ferner auch ein Gespann umfassend einen solchen landwirtschaftlichen Lade- und/oder Transportwagen sowie einen Schlepper, an den der Lade- und/oder Transportwagen angebaut ist, wobei die Anzeigevorrichtung an einem Führerstand des Schleppers vorgesehen ist.

Bei landwirtschaftlichen Lade- und/oder Transportwagen ist es nicht nur relevant zu wissen, wann der Laderaum komplett befüllt ist, sondern auch wünschenswert zu erfahren, wie sich das Erntegut im Laderaum verteilt und sich der Erntegutstock aufbaut, da dann durch Ergreifen geeigneter Maßnahmen eine gleichmäßigere Verteilung und damit eine insgesamt bessere Befüllung erreicht werden kann. Baut sich beispielsweise in einem frontseitigen Laderaumabschnitt ein übermäßig hoher Ernteguthaufen auf, während zum Heck hin noch wenig Erntegut angesammelt ist, kann ein Kratzboden eingeschaltet werden, um das Erntegut mehr zum Heck hin zu verteilen. Darüber hinaus ist aber auch die absolute Höhe der Erntegutbefüllung in den verschiedenen Bereichen von Relevanz, da dies dem Maschinenführer eine Abschätzung ermöglicht, ob beispielsweise ein bestimmter Feldbereich noch abgeerntet werden kann.

Solche landwirtschaftlichen Ladewagen, die über eine Anbauvorrichtung wie beispielsweise eine Deichsel an einen Schlepper angebaut werden können, umfassen regelmäßig eine Aufnahmevorrichtung zum Aufnehmen des Ernteguts vom Boden, wobei eine solche Aufnahmevorrichtung beispielsweise eine Pickup mit einer rotatorisch umlaufenden Stachelwalze aufweisen und das Erntegut mittels eines Förderrotors gegebenenfalls durch ein Schneidwerk hindurch in den Laderaum fördern kann. Andererseits sind aber auch Transportwagen wie beispielsweise Häckselwagen bekannt, die keine solche Aufnahmevorrichtung umfassen und von oben her über ein Gebläserohr oder ein Förderband befüllt werden können, das von einer parallel fahrenden Maschine geführt wird. Um bei einem solchen Häckselwagen eine gleichmäßige Verteilung des Ernteguts im Laderaum zu erzielen bzw. Ungleichmäßigkeiten im Füllstand auszugleichen, kann die Position des Transportwagens relativ zu dem über Kopf befindlichen Befüllförderer verändert werden, beispielsweise durch Erhöhen oder Verringern der Fahrgeschwindigkeit.

Um den Erntegutfüllstand im Laderaum solcher Lade- bzw. Transportwagen zu erfassen, wurden im Stand der Technik bereits diverse Füllstands-Erfassungseinrichtungen vorgeschlagen. Beispielsweise zeigt die Schrift DE 20 2006 018 149 U1 einen landwirtschaftlichen Transportwagen, bei dem eine berührungslose Sensorik an der Heckklappe des Laderaums angebracht ist und den Laderaum hinsichtlich seines Füllstands überwacht. Die genannte Sensorik umfasst dabei einen Ultraschallsensor, der eine Schallkeule in den Laderaum wirft und das Impulsecho auswertet. Zusätzlich wird vorgeschlagen, eine in den Laderaum gerichtete Kamera vorzusehen und dem Fahrer das Kamerabild im Führerstand anzuzeigen.

Für den Schlepperführer ist es allerdings aufgrund der geänderten Perspektive des Kamerabilds und auch der "Blickrichtung" der Ultraschallkeule, die mit seiner Perspektive vom Schlepperführerstand nicht übereinstimmt, schwierig, sich anhand des Kamerabilds und der Ultraschalldarstellung zurecht zu finden und tatsächlich zutreffend abzuschätzen, in welchen Abschnitten des Laderaums sich wie viel Erntegut angesammelt hat.

Der vorliegenden Erfindung liegt daher die Aufgabe zugrunde, einen verbesserten landwirtschaftlichen Lade- und/oder Transportwagen zu schaffen, der Nachteile des Standes der Technik vermeidet und letzteren in vorteilhafter Weise weiterbildet. Insbesondere soll eine verbesserte Überwachung des Erntegutfüllstands im Laderaum geschaffen werden, die einem Schlepperführer die Abschätzung der Füllstandshöhe und der Erntegutverteilung in verschiedenen Laderaumabschnitten erleichtert.

Erfindungsgemäß wird die genannte Aufgabe durch einen landwirtschaftlichen Lade- und/oder Transportwagen gemäß Anspruch 1 sowie ein landwirtschaftliches Gespann gemäß Anspruch 14 gelöst. Bevorzugte Ausgestaltungen der Erfindung sind Gegenstand der abhängigen Ansprüche.

Es wird also vorgeschlagen, den Laderaum von verschiedenen Seiten her zu beobachten und die aus verschiedenen Blickrichtungen aufgenommenen Erfassungsbilder so auszuwerten, dass dem Schlepperführer Höheninformationen zu den verschiedenen Bereichen des Laderaums angezeigt werden können. Erfindungsgemäß umfasst die Füllstands-Erfassungseinrichtung mehrere bildgebende Sensoren, die auf unterschiedlichen Seiten des Laderaums an dessen oberem Randabschnitt angeordnet sind, wobei eine Bildverarbeitungseinheit vorgesehen und dazu ausgebildet ist, die Sensorbilder auszuwerten, Füllstandshöhen in verschiedenen Laderaumabschnitten aus den mehreren, von verschiedenen Laderaumseiten aufgenommenen Sensorbildern zu bestimmen und ein Füllstandssignal mit Höheninformationen für verschiedene Laderaumabschnitte an die Anzeigevorrichtung bereit zu stellen.

Vorteilhafterweise können die auf unterschiedlichen, insbesondere gegenüberliegenden Laderaumseiten angeordneten bildgebenden Sensoren einander überlappende Erfassungsbereiche innerhalb des Laderaums besitzen. Die genannte Bildverarbeitungseinheit kann vorteilhafterweise die Sensorbilder überlagern und/oder einzeln auswerten, um aus mehreren denselben Erfassungsbereich wiedergebenden Sensorbildern eine Füllstandsinformation für einen jeweiligen Laderaumbereich, der in dem überlappenden Erfassungsbereich liegt, zu bestimmen. Das von der Bildverarbeitungseinheit bereitgestellte Füllstandssignal wird von der Bildverarbeitungseinheit aus den Informationen zusammengesetzt, die die Sensorbilder zu den überlappenden Erfassungsbereichen beinhalten.

Gibt die Auswertung der Sensorbilder zu einem überlappenden Erfassungsbereich unterschiedliche Höheninformationen zu einem bestimmten Laderaumabschnitt, kann beispielsweise der Mittelwert der beiden Höhenwerte als Füllstandsinformation für den jeweiligen Ladebereich bereitgestellt werden. Alternativ kann aber auch ein aus den verschiedenen Höheninformationen, die aus den verschiedenen Sensorbildern gewonnen wurden, ausgewählt werden und beispielsweise die niedrigere ermittelte Füllstandshöhe für den jeweiligen Bereich als Füllstandsinformation bereitgestellt werden. Hierdurch kann der Problematik Rechnung getragen werden, dass einem der bildgebenden Sensoren der "Blick" auf einen bestimmten Laderaumbereich verdeckt ist, beispielsweise weil zwischen dem interessierenden Laderaumbereich und der Position des bildgebenden Sensors ein höherer Erntegutbereich vorhanden ist. Hat sich beispielsweise im vorderen Endbereich des Laderaums viel Erntegut aufgetürmt, kann ein am vorderen Laderaumende angeordneter Sensor nicht mehr auf die heckseitigen Laderaumbereiche blicken, so dass es wahrscheinlich ist, dass die Höheninformation, die aus dem Sensorbild eines heckseitig angeordneten Sensors zutreffender ist.

Es können aber auch mehrere bildgebende Sensoren ohne überlappende Erfassungsbereiche vorgesehen sein, von denen jeder seinen eigenen Erfassungsbereich beobachtet. Auch hier kann ein einheitliches Anzeigebild aus den mehreren Sensorbildern zusammengesetzt werden.

In vorteilhafter Weiterbildung der Erfindung sind zumindest zwei bildgebende Sensoren auf gegenüberliegenden Seiten des Laderaums insbesondere an dessen oberem Endabschnitt angeordnet, um von gegenüberliegenden Seiten auf den Laderaum zu blicken. Insbesondere können auch zumindest vier bildgebende Sensoren angebracht werden, die paarweise gegenüberliegend und/oder auf vier verschiedenen Seiten des Laderaums angeordnet sind, beispielsweise an den in Fahrtrichtung betrachtet Förder- und Heckseiten des Laderaums sowie den rechten und linken Seiten des Laderaums.

In Weiterbildung der Erfindung können bei einem in der Draufsicht rechteckigen Laderaum bildgebende Sensoren in jeder der vier Ecken angebracht, insbesondere am oberen Rand des Laderaums positioniert werden, um von den Ecken schräg nach unten in den Laderaum zu blicken.

Das von der Bildverarbeitungseinheit bereitgestellte Füllstandssignal kann insbesondere ein Höhenreliefsignal sein, das Höheninformationen zu einer Matrix von über den Laderaum verteilt angeordneten Bildpunkten enthält, wobei die genannten Höheninformationen jeweils die abschnittsweise Füllstandshöhe in einem jeweils anderen Laderaumabschnitt wiedergeben. Die genannten Höheninformationen können insbesondere absolute Höhenwerte sein, die die Höhe der Erntegutoberfläche über dem Laderaumboden in einem jeweiligen Laderaumabschnitt angibt. Die genannte Ernteguthöhe kann die vertikale Beabstandung der Oberfläche des Erntegutstocks vom Laderaumboden sein.

Um dem Schlepperführer eine intuitive Erfassung des Höhenreliefs des Laderaumfüllstands zu ermöglichen, können die genannten Höheninformationen des Höhenreliefsignals in Form von Graustufen- und/oder Farbtemperaturwerten bestimmt und zu einem jeweiligen Bildpunkt gespeichert und/oder angezeigt werden. Wird das Höhenreliefsignal auf der Anzeigevorrichtung angezeigt, ergibt sich dementsprechend ein Graustufen- und/oder Farbbild, in dem die verschiedenen Graustufen und/oder verschiedenen Farben unterschiedliche Höhenwerte angeben. Das Raster der grauen und/oder farbigen Höhenwerte bildet die Höhenreliefdarstellung.

Beispielsweise können die Höheninformationen einer kontinuierlichen oder gestuften Hell-/Dunkelskala folgen, beispielsweise dergestalt, dass ein niedrigerer Füllstand in einem hellen oder blassen Gelbton, ein mittlerer Füllstand in einem dunkleren oder kräftigeren Orangeton und ein hoher Füllstand in einem dunklen und/oder kräftigen Rotton dargestellt werden, so dass ein Schlepperführer leicht erkennen kann, dass dort, wo das Bild blassgelb ist, ein niedriger Füllstand vorliegt, und dort, wo das Bild zunehmend orange oder dunkelrot wird, ein zunehmend höherer Füllstand vorliegt. Die Darstellung kann auch einer Ampel-Farbenskala folgen und beispielsweise noch unbefüllte Bereiche grün, etwa zur Hälfte befüllte Bereiche gelb und voll beladene Bereiche rot anzeigen.

Vorteilhafterweise kann die genannte Bildverarbeitungseinheit dazu ausgebildet sein, aus den Signalen der bildgebenden Sensoren ein zusammengesetztes, vogelperspektivisches Bild zu erzeugen, das den Laderaum vorzugsweise in seiner Gesamtheit von oben her zeigt und in der genannten Weise das Höhenrelief des im Laderaum gesammelten Ernteguts in Form eines Graustufen- und/oder Farbmusters wiedergeben kann.

Um dem Schlepperführer die Erfassung des angezeigten Höheninformationsbilds und die Zuordnung einzelner Bildabschnitte zu bestimmten Laderaumabschnitten zu erleichtern, kann in vorteilhafter Weiterbildung der Erfindung in das zusammengesetzte, vorzugsweise vogelperspektivische Bild des Laderaums und dessen Füllstands eine Darstellung der Laderaumwandungen und/oder anderer orientierungsunterstützender Elemente des Lade- und/oder Transportwagens eingeblendet werden. Beispielsweise können in das Höhenreliefbild bzw. daran angrenzend eine Darstellung der Deichsel und eine Darstellung der Fahrwerksräder und/oder des den Lade- und/oder Transportwagen ziehenden Schleppers eingeblendet werden, so dass für den das Bild betrachtenden Schlepperführer unmittelbar klar ist, welcher Abschnitt des Höhenreliefbildes welchen Abschnitt des Laderaums abbildet.

Vorteilhafterweise kann die genannte Bildverarbeitungseinheit ein Augmented-Reality-System und/oder ein Virtual-Reality-System umfassen, das die ermittelten Höheninformationen zum Füllstand in verschiedenen Laderaumabschnitten in eine Darstellung des Lade- und/oder Transportwagens bzw. Teilen hiervon einblendet.

Die genannte Darstellung der Laderaumwandungen und/oder der Lade- bzw. Transportwagenumrisse oder -elemente kann ein Livebild oder gespeichertes Kamerabild, aber auch eine computergenerierte Darstellung sein.

Die genannten bildgebenden Sensoren können insbesondere als Kamera ausgebildet sein, wobei zumindest einer der bildgebenden Sensoren auch in Form einer 3D-Kamera ausgebildet sein kann. Alternativ oder zusätzlich können aber auch andere bildgebende Sensoren Verwendung finden, beispielsweise Ultraschallsensoren, deren Ultraschallbild in der genannten Weise ausgewertet wird.

Die genannte Bildverarbeitungseinheit, der die mehreren Signale der mehreren bildgebenden Sensoren zugeführt werden, setzt aus den genannten Signalen ein gemeinsames, insbesondere einheitliches Laderaumbild zusammen, welches auf der Anzeigevorrichtung angezeigt werden kann und insbesondere die genannten Höheninformationen beinhalten kann. Beispielsweise kann die genannte Bildverarbeitungseinrichtung anhand der bekannten oder aus einem Speicher ausgelesenen Sensorpositionen und/oder Sensorblickrichtungen bestimmen, wo die Übergangsbereiche der einzelnen Bilder sind, und für die Anzeige passend überlagern bzw. zusammensetzen, und/oder bestimmen, wo jeweilige Bildabschnitte im Laderaum oder relativ zu den Laderaumwandungen positioniert sind. Alternativ oder zusätzlich kann die Bildverarbeitungseinheit auch einen Bildanalysebaustein umfassen, der beispielsweise anhand von Pixelmustern und/oder Farbmustern und/oder Hell-/Dunkelkonturen in verschiedenen Bildern einander entsprechende Bereiche ermitteln kann, um die mehreren sensorisch bzw. von jeweils einer Kamera erfassten Bilder passend zu einem zusammengesetzten Laderaumbild zu überlagern bzw. zusammenzufügen.

Das von der Bildverarbeitungseinheit bereitgestellte Füllstandssignal mit Höheninformationen zu verschiedenen Laderaumabschnitten kann nicht nur auf der Anzeigevorrichtung dargestellt werden, sondern auch dazu verwendet werden, um automatisch oder halbautomatisch über Stellaktoren zumindest einen Betriebsparameter des Lade- und/der Häckselwagens und/oder des damit verbundenen Schleppers zu verändern. Insbesondere kann bei einem Ladewagen ein Kratzbodenantrieb zum Antreiben eines Kratzbodens und/oder ein Antrieb einer Aufnahmevorrichtung, beispielsweise eines das aufgenommene Erntegut in den Laderaum fördernden Förderrotors, in Abhängigkeit des Füllstandssignals angepasst werden. Beispielsweise kann der Kratzbodenantrieb automatisch eingeschaltet werden, wenn das Füllstandssignal Höheninformationen beinhaltet, die einen relativ hohen Füllstand im vorderen Ende des Laderaums und einen relativ niedrigen Füllstand am Heck des Laderaums ergeben. Gegebenenfalls kann dies auch in halbautomatischer Form dadurch erfolgen, dass auf der Anzeigevorrichtung ein entsprechendes Signal für den Maschinenführer angezeigt wird, beispielsweise in der Form "Kratzbodenantrieb einschalten".

Alternativ oder zusätzlich kann in Abhängigkeit der bestimmten Höheninformationen der Antrieb der Aufnahmevorrichtung verlangsamt oder beschleunigt und/oder ein Fahrantrieb des Schleppers beschleunigt oder verlangsamt werden, um die in den Laderaum gelangende Erntegutmenge zu erhöhen oder zu erniedrigen.

Bei einem Häckselwagen kann in Abhängigkeit der Höheninformationen des Füllstandssignals eine Relativposition zwischen dem über Kopf befindlichen Zuförderer und dem zu befüllenden Transportwagen verändert werden, beispielsweise durch Erhöhen oder Erniedrigen der Fahrgeschwindigkeit des den Häckselwagen ziehenden Schleppers und/oder des den Befüllförderer führenden Parallelgeräts. Alternativ oder zusätzlich kann in Abhängigkeit der Höheninformationen in einen Lenkwinkel eingegriffen werden, um den Lade- und/oder Transportwagen relativ zum Befüllförderer weiter nach rechts oder weiter nach links zu steuern, wenn in einem linken oder rechten Abschnitt des Laderaums mehr oder weniger Erntegut befüllt werden soll.

Alle genannten Eingriffe in die genannten Betriebsparameter können vollautomatisch oder halbautomatisch in der genannten Weise erfolgen.

Die Erfindung wird nachfolgend anhand eines bevorzugten Ausführungsbeispiels und zugehöriger Zeichnungen näher erläutert. In den Zeichnungen zeigen:
- Fig. 1: eine schematische Draufsicht auf einen Ladewagen nach einer Ausführung der Erfindung, die die Anordnung der bildgebenden Sensoren auf gegenüberliegenden Seiten und in den Ecken des Laderaums zeigt,
- Fig. 2: eine Seitenansicht des Ladewagens aus Fig. 1, die ebenfalls die Anordnung der bildgebenden Sensoren am oberen Rand des Laderaums zeigt,
- Fig. 3: eine schematische Darstellung der Anbindung der bildgebenden Sensoren an eine Bildverarbeitungseinheit, die eine Füllstandsanzeige mit Höheninformationen für verschiedene Laderaumabschnitte für eine Anzeigevorrichtung generiert,
- Fig. 4: eine Darstellung der Füllstandsanzeige, die auf der Anzeigevorrichtung dargestellt wird, in Form einer Höhenreliefdarstellung mit Höheninformationen in Form von Graustufen- bzw. Farbtemperaturwerten, die in eine vogelperspektivische Darstellung des Ladewagens eingeblendet werden, und
- Fig. 5: eine Darstellung des Ladewagens auf der Anzeigevorrichtung zusammen mit einer eingeblendeten Darstellung eines Häckselstrahls, der die Position eines Befüllförderers zum über-Kopf-seitigen Befüllen des Wagens zeigt.

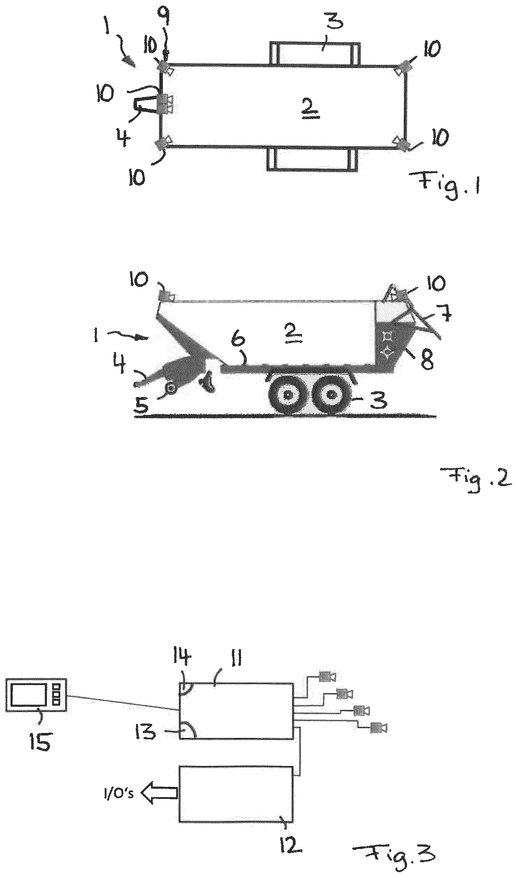

Wie Fig. 1 und Fig. 2 zeigen, kann der Ladewagen 1 einen Laderaum 2 umfassen, der von aufrechten Laderaumwänden begrenzt wird, die auf einem Chassis angeordnet sind, welches durch ein Fahrwerk 3 auf dem Boden abgestützt ist.

Der Ladewagen 1 kann beispielsweise über eine Deichsel 4 an einem nicht gezeigten Schlepper angebaut werden. Eine Aufnahmevorrichtung 5 kann vorgesehen sein, um Erntegut vom Boden beispielsweise in Form eines Heuschwads aufnehmen zu können, wobei die genannte Aufnahmevorrichtung 5 beispielsweise eine rotatorisch umlaufend antreibbare Stachelwalze in Form einer Pickup umfassen kann. Das aufgenommene Erntegut kann in den genannten Laderaum 2 gefördert werden.

Am Boden des Laderaums 2 kann ein Kratzbodenförderer 6 vorgesehen sein, um das Erntegut, das an einem frontseitigen Ende in den Laderaum 2 gefördert werden kann, zu einem heckseitigen Ende des Laderaums 2 zu befördern. Über eine heckseitige, aufschwenkbare Heckklappe 7 kann der Ladewagen 1 gegebenenfalls über eine Dosiervorrichtung 8 entladen werden, vgl. Figur 2.

Um den Erntegutfüllstand in dem Laderaum 2 zu erfassen, umfasst eine Füllstands-Erfassungseinrichtung 9 mehrere bildgebende Sensoren 10, die beispielsweise in Form einer Kamera oder auch einer 3D-Kamera ausgebildet sein können, wobei alternativ oder zusätzlich aber auch andere Sensoren wie beispielsweise Ultraschallsensoren vorgesehen sein können.

Wie die Figuren 1 und 2 zeigen, sind die genannten bildgebenden Sensoren 10 vorteilhafterweise an einem oberen Randabschnitt des Laderaums 2 auf gegenüberliegenden Seiten angeordnet, wobei die genannten Sensoren 10 beispielsweise an den oberen Rändern der Laderaumwandungen befestigt sein können. Vorteilhafterweise können an jeder oberen Ecke des Laderaums 2 solche Sensoren angebracht sein, wobei an einer Seite, beispielsweise der Vorderseite auch mehr als ein oder mehr als zwei Sensoren angebracht sein können.

Die bildgebenden Sensoren 10 blicken von unterschiedlichen Seiten von oben her in den Laderaum 2, wobei die genannten Sensoren 10 einander überlappende Erfassungsbereiche besitzen können. Grundsätzlich wäre es aber auch möglich, die Erfassungsbereiche nebeneinanderliegend auszubilden.

Wie Figur 3 zeigt, werden die Signale der bildgebenden Sensoren 10 einer Bildverarbeitungseinheit 4 bereitgestellt, die ein eigener Baustein sein oder auch als Teil eines Jobrechners 12 des Ladewagens 1 implementiert sein kann. Die genannte Bildverarbeitungseinheit 11 kann elektronisch arbeitend ausgebildet sein und beispielsweise einen Prozessor und einen Datenspeicher umfassen, wobei vorteilhafterweise bildverarbeitende Datenverarbeitungsbausteine wie eine Bildanalyseeinrichtung, eine Pixelanalyseeinrichtung, Kontrast- und/oder Konturerfassungsmittel und dergleichen vorgesehen sein können.

Die genannte Bildverarbeitungseinheit 12 fasst die Signale der verschiedenen Sensoren 10 zusammen und setzt daraus ein zusammengesetztes, einheitliches Laderaumbild zusammen, welches den Laderaum vorteilhafterweise vollständig zeigt, insbesondere den sich darin ansammelnden Erntegutstock bzw. -teppich.

Vorteilhafterweise umfasst die genannte Bildverarbeitungseinheit 11 einen Bildauswertebaustein 13, der die Sensorbilder der verschiedenen Sensoren 10 auswertet und für verschiedene Abschnitte des Laderaums 2 Höheninformationen bestimmt, die die Höhe des sich im jeweiligen Laderaumbereich angesammelten Ernteguts wiedergibt. Insbesondere kann der genannte Bildauswertebaustein 13 für eine Matrix von vielen Bildpunkten jeweils eine Höheninformation bestimmen, die im jeweiligen Bildpunkt die Ernteguthöhe angibt.

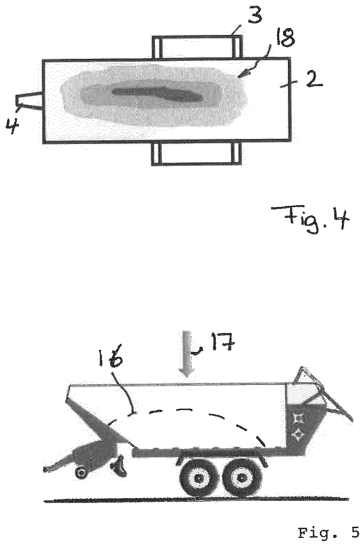

Wie Figur 4 verdeutlicht, kann das die genannten Höheninformationen umfassende Füllstandssignal vorteilhafterweise als Höhenreliefbild ausgebildet sein, welches die genannten Höheninformationen in Form von Graustufen- und/oder Farbtemperaturwerten beinhaltet. Für jeden Bildpunkt des Laderaumbilds wird eine bestimmte Graustufe oder eine bestimmte Farbe bestimmt, die einer bestimmten Ernteguthöhe entspricht. Bei dem in Figur 4 gezeigten Laderaumbild wird das Höhenreliefbild ring- bzw. zwiebelschalenartig zum Zentrum hin immer dunkler und hiervon abgesehen zum Heck des Laderaums 2 hin immer heller, was dem Schlepperführer anzeigt, dass zum Zentrum hin die Ernteguthöhe im Laderaum 2 ansteigt und zum Heck hin stärker abfällt als zur Front hin.

Vorteilhafterweise kann das von der Bildverarbeitungseinheit 11 zusammengesetzte Laderaumbild den genannten Laderaum 2 vorteilhafterweise von einer Oberseite her und/oder in Vogelperspektive zeigen. Insbesondere kann die genannte Höhenreliefdarstellung mit Höheninformationen in Form von Graustufenwerten oder Farbtemperaturwerten eine vogelperspektivische Darstellung des Laderaums sein.

Um dem Schlepperführer die Zuordnung der Laderaumdarstellung zu verschiedenen Bereichen des Ladewagens 1 zu erleichtern, wird das genannte Höhenreliefbild vorteilhafterweise in ein Bild bzw. eine Darstellung des Ladewagens 1 eingeblendet, das die Umrisskonturen des Laderaums 2 und/oder andere orientierungsgebende Elemente des Ladewagens 1 wie beispielsweise dessen Deichsel 4 und/oder dessen Fahrwerk 3 zeigen kann. Wie Figur 4 verdeutlicht, macht dies dem Schlepperführer leicht klar, dass die im Zentrum befindliche, höchste Füllstandshöhe etwa im Bereich um das vordere Ende des Fahrwerks 3 herum vorliegt und sich in Längsrichtung etwa mittig, leicht zur rechten Ladewagenseite hin versetzt ergibt.

Vorteilhafterweise sind sowohl die Füllstandsdarstellung insbesondere in Form des gezeigten Höhenreliefs und die Darstellung des Laderaums 2 und/oder weiterer Ladewagenelemente jeweils in Vogelperspektive.

Alternativ oder zusätzlich kann es aber auch hilfreich sein, eine seitenperspektivische Darstellung des Ladewagens 1 und/oder des Laderaums 2 auf der Anzeigevorrichtung 15, insbesondere deren Bildschirm 16 anzuzeigen. Dabei kann in die Darstellung der Umrisskonturen und/oder eines Schnitts durch den Laderaum 2 einerseits ein Höhenprofil 16 eingeblendet werden und hiervon unabhängig andererseits eine Darstellung eines Häckselstrahls 17 eingeblendet werden, das die Position eines überkopfseitig angeordneten Befüllförderers eines parallel fahrenden Erntefahrzeugs zeigt. Der Häckselstrahl 17 bzw. dessen Position kann beispielsweise ebenfalls aus den Sensorbildern der bildgebenden Sensoren 10 ermittelt werden, indem in den Sensorbildern beispielsweise der näherungsweise vertikal herabfallende Strahl bestimmt wird.

Die Einblendung der Höheninformationen in Form von des in Figur 4 gezeigten Höhenreliefbilds und/oder der Graustufen- bzw. Farbtemperaturbilder und/oder der Häckselstrahlinformation 17 in ein Bild oder eine Darstellung des Laderaums 2 und/oder des Ladewagens 1 kann vorteilhafterweise durch ein Augmented Reality System 14 oder ein Virtual Reality System erfolgen, das die entsprechenden Höheninformationen und/oder Befüllinformationsinformationen in ein gespeichertes Bild oder eine computergenerierte Darstellung des Laderaums 2 und/oder des Ladewagens 1 einblendet.

## Patentansprüche

1. Landwirtschaftlicher Lade- und/oder Transportwagen, mit einem Laderaum (2) zum Aufnehmen von Erntegut, einer Füllstands-Erfassungseinrichtung (9) zum Erfassen des Erntegutfüllstands in dem Laderaum (2) sowie Bereitstellen eines Füllstandsignals an eine Anzeigevorrichtung (15) zum Anzeigen des erfassten Füllstands, **dadurch gekennzeichnet, dass** die Füllstands-Erfassungseinrichtung (9) mehrere bildgebende Sensoren (10), die auf unterschiedlichen Seiten des Laderaums (2) an dessen oberem Randabschnitt angeordnet sind, sowie eine Bildverarbeitungseinheit (11) zum Auswerten der Sensorbilder der genannten Sensoren (10), zum Bestimmen von Erntegut-Höheninformationen für verschiedene Laderaumabschnitte aus den mehreren, von verschiedenen Seiten des Laderaums (2) aufgenommenen Sensorbildern und Bereitstellung eines Füllstandssignals umfassend die bestimmten Höheninformationen für verschiedene Laderaumabschnitte an die Anzeigevorrichtung (15) aufweist.

2. Landwirtschaftlicher Lade- und/oder Transportwagen nach dem vorhergehenden Anspruch, wobei die bildgebenden Sensoren (10) einander überlappende Erfassungsbereiche besitzen und die Bildverarbeitungseinheit (13) dazu ausgebildet ist, die Sensorbilder der bildgebenden Sensoren (10) zu überlagern und zu einem einheitlichen Laderaumbild zusammenzusetzen und aus mehreren denselben Erfassungsbereich wiedergebenden Sensorsignalen ein den Füllstand in verschiedenen Laderaumbereichen, die in dem genannten Erfassungsbereich liegen, wiedergebendes Füllstandssignal zu erzeugen.

3. Landwirtschaftlicher Lade- und/oder Transportwagen nach einem der vorhergehenden Ansprüche, wobei die zumindest zwei bildgebenden Sensoren (10) auf einander gegenüberliegenden Seiten des Laderaums (2) angeordnet sind.

4. Landwirtschaftlicher Lade- und/oder Transportwagen nach einem der vorhergehenden Ansprüche, wobei zumindest vier bildgebende Sensoren (10) vorgesehen sind, die paarweise auf gegenüberliegenden Seiten des Laderaums angeordnet, insbesondere in den vier Eckbereichen des in der Draufsicht rechteckigen Laderaums (2) angeordnet sind.

5. Landwirtschaftlicher Lade- und/oder Transportwagen nach einem der vorhergehenden Ansprüche, wobei die bildgebenden Sensoren (10) jeweils als Kamera ausgebildet sind.

6. Landwirtschaftlicher Lade- und/oder Transportwagen nach einem der vorhergehenden Ansprüche, wobei zumindest einer der bildgebenden Sensoren (10) als 3D-Kamera ausgebildet ist.

7. Landwirtschaftlicher Lade- und/oder Transportwagen nach einem der vorhergehenden Ansprüche, wobei die Bildverarbeitungseinheit (13) dazu ausgebildet ist, als Füllstandssignal ein Höhenreliefbildsignal mit Höheninformationen zu einer Matrix von über den Laderaum (2) verteilten Bildpunkten zu erzeugen, welche Höheninformationen jeweils abschnittsweise Füllstandshöhen in verschiedenen Laderaumabschnitten wiedergeben.

8. Landwirtschaftlicher Lade- und/oder Transportwagen nach einem der vorhergehenden Ansprüche, wobei die Höheninformationen in Form von Graustufen- und/oder Farbtemperaturwerten ausgebildet sind, die jeweiligen Bildpunkten und/oder Bildabschnitten zugeordnet sind.

9. Landwirtschaftlicher Lade- und/oder Transportwagen nach dem vorhergehenden Ansprüche, wobei die Bildverarbeitungseinheit ein Augmented Reality System (14) oder ein Virtual Reality System zum Einblenden der Höheninformationen, insbesondere eines Höhenreliefbilds, in eine Darstellung oder ein Bild des Laderaums (2) aufweist.

10. Landwirtschaftlicher Lade- und/oder Transportwagen nach dem vorhergehenden Anspruch, wobei das Augmented Reality System (14) oder das Virtual Reality System dazu ausgebildet ist, auf der Anzeigevorrichtung (15) eine vogelperspektivische Darstellung des Lade- und/oder Transportwagens (1) einschließlich dessen Laderaums (2) und weiterer orientierungsgebender Wagenelemente wie Deichsel (4) oder Fahrwerk (3) anzuzeigen und in die genannte Darstellung die Höheninformationen, die den Erntegutfüllstand in verschiedenen Laderaumabschnitten wiedergeben, einzublenden.

11. Landwirtschaftlicher Lade- und/oder Transportwagen nach einem der vorhergehenden Ansprüche, wobei das Augmented Reality System (14) oder das Virtual Reality System dazu ausgebildet ist, auf der Anzeigevorrichtung (15) eine Seitenansichts-Darstellung des Lade- und/oder Transportwagens (1) einschließlich dessen Laderaums (2) und weiterer orientierungsgebender Wagenelemente wie Deichsel (4) und/oder Fahrwerk (3) anzuzeigen und in die genannte Darstellung einen Häckselstrahl (17), der die Position eines Befüllförderers wiedergibt, und/oder ein Höhenprofil (16), welches die Längsverteilung des Ernteguts wiedergibt, einzublenden.

12. Landwirtschaftlicher Lade- und/oder Transportwagen nach einem der vorhergehenden Ansprüche, wobei eine Steuervorrichtung (12) zum automatischen oder halbautomatischen Steuern zumindest einer Betriebsfunktion in Abhängigkeit der aus den Sensorbildern generierten Höheninformationen aufweist.

13. Landwirtschaftlicher Lade- und/oder Transportwagen nach dem vorhergehenden Anspruch, wobei die Steuervorrichtung (12)
- eine Lenkhilfevorrichtung zum Bestimmen eines Lenkwinkels in Abhängigkeit der Höheninformationen umfasst, wobei die Lenkhilfevorrichtung dazu ausgebildet ist, ein Lenksignal zu generieren, das den Lade- und/oder Transportwagen (1) weiter nach rechts führt, wenn in einem linken Laderaumabschnitt ein relativ niedrigerer Füllstand erfasst wurde und weiter nach links führt, wenn in einem rechten Laderaumabschnitt ein relativ niedrigerer Füllstand erfasst wurde, und/oder
- einen Fahrgeschwindigkeitsregler zum Erhöhen oder Erniedrigen der Fahrgeschwindigkeit in Abhängigkeit der ermittelten Höheninformationen aufweist.

14. Landwirtschaftliches Gespann umfassend einen landwirtschaftlichen Lade- und/oder Transportwagen nach einem der vorhergehenden Ansprüche sowie einen Schlepper, an den der Lade- und/oder Transportwagen (1) angebaut ist, wobei die Anzeigevorrichtung (15) an einem Führerstand des Schleppers vorgesehen ist.

15. Landwirtschaftliches Gespann nach dem vorhergehenden Anspruch, wobei die Bildverarbeitungseinheit (11) zumindest teilweise am landwirtschaftlichen Lade- und/oder Transportwagen (1) und/oder zumindest teilweise am Schlepper vorgesehen ist.

## Claims

1. Agricultural loading and/or transport wagon, comprising a loading space for receiving harvested material, a fill level detection device (9) for detecting the harvested material level in the loading space (2) and for providing a fill level signal to a display device (15) for displaying the detected harvested material level, **characterized in that** the fill level detection device (9) comprises a plurality of imaging sensors (10) arranged on different sides of the loading space (2) at the upper edge portion thereof, and an image processing unit (11) for evaluating the sensor images of said sensors (10), for determining harvested material height information for different loading space sections from the plurality of sensor images taken from different sides of the loading space (2) and providing a fill level signal comprising the determined height information for different loading space sections to the display device (15).

2. Agricultural loading and/or transport wagon according to the preceding claim, wherein the imaging sensors (10) have overlapping detection areas and the image processing unit (13) is configured to superimpose the sensor images of the imaging sensors (10) and to combine them to form a uniform loading space image and to generate a fill level signal reflecting the fill level in different loading space areas located within said detection area from a plurality of sensor signals reproducing the same detection area.

3. Agricultural loading and/or transport wagon according to one of the preceding claims, wherein the at least two imaging sensors (10) are arranged on opposite sides of the loading space (2).

4. Agricultural loading and/or transport wagon according to one of the preceding claims, wherein at least four imaging sensors (10) are provided, which are arranged in pairs on opposite sides of the loading space, in particular in the four corner regions of the loading space (2), which is rectangular in plan view.

5. Agricultural loading and/or transport wagon according to one of the preceding claims, wherein the imaging sensors (10) are each designed as a camera.

6. Agricultural loading and/or transport wagon according to one of the preceding claims, wherein at least one of the imaging sensors (10) is designed as a 3D camera.

7. Agricultural loading and/or transport wagon according to one of the preceding claims, wherein the image processing unit (13) is configured to generate, as fill level signal, a height relief image signal with height information for a matrix of pixels distributed over the loading space (2), which height information in each case reflects fill level heights in different loading space sections section by section.

8. Agricultural loading and/or transport wagon according to one of the preceding claims, wherein the height information is in the form of gray scale and/or color temperature values which are associated with respective pixels and/or image sections.

9. Agricultural loading and/or transport wagon according to one of the preceding claims, wherein the image processing unit comprises an augmented reality system (14) or a virtual reality system for superimposing the height information, in particular a height relief image, into a representation or an image of the loading space (2).

10. Agricultural loading and/or transport wagon according to the preceding claim, wherein the augmented reality system (14) or the virtual reality system is configured to display on the display device (15) a bird's eye view of the loading and/or transport wagon (1) including its loading space (2) and further orientation-indicating wagon elements such as drawbar (4) or running gear (3) and to fade into said display the height information which reflects the harvested material fill level in various loading space sections.

11. Agricultural loading and/or transport wagon according to one of the preceding claims, wherein the augmented reality system (14) or the virtual reality system is designed for this purpose, displaying on the display device (15) a side view representation of the loading and/or transport wagon (1), including its loading space (2) and further orientation-indicating wagon elements such as drawbar (4) and/or running gear (3), and fading into the said representation a chopping ray (17), which reflects the position of a filling conveyor, and/or a height profile (16), which reflects the longitudinal distribution of the harvested material.

12. Agricultural loading and/or transport wagon according to one of the preceding claims, wherein a control device (12) is provided for automatically or semiautomatically controlling at least one operating function as a function of the height information generated from the sensor images.

13. Agricultural loading and/or transport wagon according to the preceding claim, wherein the control device (12) comprises
- a steering assistance device for determining a steering angle as a function of the height information, wherein the steering assistance device is configured to generate a steering signal which guides the loading and/or transport wagon (1) further to the right, when a relatively lower fill level has been detected in a left-hand loading space section, and guides it further to the left, when a relatively lower fill level has been detected in a right-hand loading space section, and/or
- a driving speed controller for increasing or decreasing the driving speed as a function of the height information determined.

14. Agricultural combination, comprising an agricultural loading and/or transport wagon according to one of the preceding claims, and a tractor on which the loading and/or transport wagon (1) is attached, wherein the display device (15) is provided on a driver's cab of the tractor.

15. Agricultural combination according to the preceding claim, wherein the image processing unit (11) is at least partially provided on the agricultural loading and/or transport wagon (1) and/or at least partially on the tractor.

## Revendications

1. Chariot agricole de chargement et/ou de transport, comportant un espace de chargement (2) destiné à la réception de récolte, un moyen de détection de niveau de remplissage (9) destiné à la détection du niveau de remplissage de la récolte dans l'espace de chargement (2) ainsi qu'à fournir un signal de niveau de remplissage à un dispositif d'affichage (15) destiné à l'affichage du niveau de remplissage détecté, **caractérisé en ce que** le moyen de détection de niveau de remplissage (9) présente plusieurs capteurs d'imagerie (10) qui sont disposés sur différents côtés de l'espace de chargement (2) au niveau de sa partie de bord supérieure, ainsi qu'une unité de traitement d'image (11) destinée à l'évaluation des images de capteur desdits capteurs (10), pour déterminer des informations de hauteur de récolte pour différentes parties d'espace de chargement à partir des plusieurs images de capteur enregistrées depuis différents côtés de l'espace de chargement (2) et pour fournir au dispositif d'affichage (15) un signal de niveau de remplissage comprenant les informations de hauteur déterminées pour différentes parties d'espace de chargement.

2. Chariot agricole de chargement et/ou de transport selon la revendication précédente, dans lequel les capteurs d'imagerie (10) possèdent des zones de détection se chevauchant et l'unité de traitement d'image (13) est conçue pour superposer les images de capteur des capteurs d'imagerie (10) et les regrouper en une image d'espace de chargement homogène et pour générer, à partir de plusieurs signaux de capteur représentant la même zone de détection, un signal de niveau de remplissage représentant le niveau de remplissage dans différentes zones d'espace de chargement qui se trouvent dans ladite zone de détection.

3. Chariot agricole de chargement et/ou de transport selon l'une des revendications précédentes, dans lequel les au moins deux capteurs d'imagerie (10) sont disposés sur des côtés opposés l'un à l'autre de l'espace de chargement (2).

4. Chariot agricole de chargement et/ou de transport selon l'une des revendications précédentes, dans lequel au moins quatre capteurs d'imagerie (10) sont prévus, qui sont disposés par paires sur des côtés opposés l'un à l'autre de l'espace de chargement, en particulier disposés dans les quatre zones de coin de l'espace de chargement (2) rectangulaire en vue de dessus.

5. Chariot agricole de chargement et/ou de transport selon l'une des revendications précédentes, dans lequel chaque capteur d'imagerie (10) est réalisé sous la forme d'une caméra.

6. Chariot agricole de chargement et/ou de transport selon l'une des revendications précédentes, dans lequel au moins un des capteurs d'imagerie (10) est réalisé sous la forme d'une caméra 3D.

7. Chariot agricole de chargement et/ou de transport selon l'une des revendications précédentes, dans lequel l'unité de traitement d'image (13) est conçue pour générer, comme signal de niveau de remplissage, un signal d'image de hauteur en relief comportant des informations de hauteur relatives à une matrice de points d'image répartis sur l'espace de chargement (2), lesdites informations de hauteur représentant respectivement des hauteurs de remplissage par parties dans différentes parties d'espace de chargement.

8. Chariot agricole de chargement et/ou de transport selon l'une des revendications précédentes, dans lequel les informations de hauteur sont réalisées sous la forme de valeurs de niveaux de gris et/ou de températures de couleur qui sont associées à des points d'image respectifs et/ou parties d'image respectives.

9. Chariot agricole de chargement et/ou de transport selon la revendication précédente, dans lequel l'unité de traitement d'image présente un système de réalité augmentée (14) ou un système de réalité virtuelle destiné à l'affichage des informations de hauteur, en particulier une image de hauteur en relief, sur une visualisation ou une image de l'espace de chargement (2).

10. Chariot agricole de chargement et/ou de transport selon la revendication précédente, dans lequel le système de réalité augmentée (14) ou le système de réalité virtuelle est conçu pour afficher sur le dispositif d'affichage (15) une visualisation dans une vue à vol d'oiseau du chariot de chargement et/ou de transport (1), y compris de son espace de chargement (2) et d'autres éléments de chariot fournissant une orientation tels que le timon (4) ou le châssis (3) et pour afficher, sur ladite visualisation, les informations de hauteur qui représentent le niveau de remplissage de la récolte dans différentes parties d'espace de chargement.

11. Chariot agricole de chargement et/ou de transport selon l'une des revendications précédentes, dans lequel le système de réalité augmentée (14) ou le système de réalité virtuelle est conçu pour afficher sur le dispositif d'affichage (15) une visualisation dans une vue de côté du chariot de chargement et/ou de transport (1), y compris de son espace de chargement (2) et d'autres éléments de chariot fournissant une orientation tels que le timon (4) et/ou le châssis (3) et pour afficher, sur ladite visualisation, un jet de fourrage haché (17), qui représente la position d'un convoyeur de remplissage, et/ou un profil de hauteur (16), qui représente la répartition longitudinale de la récolte.

12. Chariot agricole de chargement et/ou de transport selon l'une des revendications précédentes, dans lequel un dispositif de commande (12) destiné à la commande automatique ou semi-automatique d'au moins une fonction opérationnelle en fonction des informations de hauteur générées à partir des images de capteur est prévu.

13. Chariot agricole de chargement et/ou de transport selon la revendication précédente, dans lequel le dispositif de commande (12)
- comprend un dispositif de direction assistée destiné à la détermination d'un angle de braquage en fonction des informations de hauteur, le dispositif de direction assistée étant conçu pour générer un signal de direction qui guide le chariot de chargement et/ou de transport (1) davantage vers la droite, quand un niveau de remplissage relativement bas a été détecté dans une partie gauche d'espace de chargement, et davantage vers la gauche, quand un niveau de remplissage relativement bas a été détecté dans une partie droite d'espace de chargement, et/ou
- présente un régulateur de vitesse de marche destiné à augmenter ou diminuer la vitesse de marche en fonction des informations de hauteur déterm inées.

14. Ensemble agricole comprenant un chariot agricole de chargement et/ou de transport selon l'une des revendications précédentes, ainsi qu'un tracteur sur lequel est installé le chariot de chargement et/ou de transport (1), le dispositif d'affichage (15) étant prévu sur un poste de conducteur du tracteur.

15. Ensemble agricole selon la revendication précédente, dans lequel l'unité de traitement d'image (11) est prévue au moins en partie sur le chariot agricole de chargement et/ou de transport (1) et/ou au moins en partie sur le tracteur.
